(19) Europäisches Patentamt
European Patent Office
Office européen des brevets

(11) **EP 2 497 734 B1**

## (12) EUROPEAN PATENT SPECIFICATION

(45) Date of publication and mention
of the grant of the patent:
**13.05.2015 Bulletin 2015/20**

(21) Application number: **11001981.7**

(22) Date of filing: **10.03.2011**

(51) Int Cl.:
**B65H 63/00** *(2006.01)*      **G01N 23/04** *(2006.01)*
**G01N 9/24** *(2006.01)*

(54) **Method for investigating the quality of the yarn winding density on a yarn bobbin**

Verfahren zur Prüfung der Qualität der Garnwickeldichte auf einer Garnspule

Procédé d'investigation de la qualité de densité du renvideur de fil sur une bobine de fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.09.2012 Bulletin 2012/37**

(73) Proprietor: **SSM Schärer Schweiter Mettler AG 8810 Horgen (CH)**

(72) Inventors:
• **Moser, Benedikt**
**8400 Winterthur (CH)**
• **Vasic, Srdan**
**8400 Winterthur (CH)**
• **Maccabruni, Davide**
**8800 Thalwil (CH)**

(74) Representative: **Gernet, Samuel Andreas
Suisse Technology Partners Ltd.
Badische Bahnhofstrasse 16
8212 Neuhausen am Rheinfall (CH)**

(56) References cited:
**JP-A- 11 171 403        KR-B1- 100 933 976
US-A1- 2003 068 007**

EP 2 497 734 B1

**Description**

The present invention relates to a method for investigating the quality of the yarn winding density on a yarn bobbin with a lateral surface having a rotational symmetry about a rotational axis and two base surfaces cross to the rotational axis. Expediently the determination process can be applied in any spatial direction, preferably perpendicular to the rotational axis.

The density and winding quality of bobbins are key parameters for dyeing and other subsequent processes such as circular and plain knitting, metered processes as in warping, and for packages used as weft yarn on weaving looms. Dye packages of yarns need to have an overall winding density as well as density gradients from top to bottom and centre to border within tight limits. However, it is so far not possible to determine these density values if they are outside of specification, moreover they are only detectable by a bad dyeing result subsequently.

From JP-A-11171403 a method is known which allows determination of the yarn winding density on a yarn bobbin using parameters describing the yarn, and US-A-2003/0068007 describes a method for measuring yarn density distribution using computed tomography.

It is an object of the present invention to provide a test method for investigating the quality of the yarn winding density on a yarn bobbin. It is a further object to obtain quantitative information of yarn bobbins (e.g., density profile of a cross section). The term 'quality of yarn winding density' includes the homogeneity of the winding density as well as the absolute value of the average density of the yarn windings. Furthermore, with the obtained data it should be possible to estimate the suitability of bobbins for dyeing based on the quality of the yarn winding density.

The foregoing object is achieved according to the invention in that the yarn winding density is visualised and characterised by applying X-Ray Computed Tomography (XRCT).

X-ray Computed Tomography (XRCT) has become a powerful tool for the three-dimensional (3D) visualisation of structures and to obtain information with a high spatial resolution. Additionally, it has the advantage of being a fast and nondestructive test method.

The quality of the yarn winding density can be visualised using back projected transmission images in a plane preferably perpendicular or parallel to the rotational axis according to the Beer-Lambert law.

Quantitative values in terms of density profiles can be obtained using back projected transmission images along cross sections preferably perpendicular or parallel to the rotational axis at different axial height levels of the yarn bobbin and transforming the back projected images to density profiles. If expedient, the determination process can be applied in any spatial direction.

Materials with different densities can be used as reference materials for the Beer-Lambert fit. Hereby, a linear fit is applied to the Beer-Lambert law yielding the possibility to transform grey level values from back projected transmission images to density values and vice versa.

Transmission images of pieces of the reference materials are recorded together with transmission images of the yarn bobbin. The pieces of the reference materials are rotating together with the yarn bobbin.

The reference materials can be fixed to a base surface of the yarn bobbin. Another possibility is to arrange the reference materials within the core of the yarn bobbin, e.g. in the form of rods parallel to the rotational axis. It is important that the reference materials are rotating together with the yarn bobbin around the same axis at the same angular speed as the yarn bobbin.

A preferred use of the method is for dye yarn packages.

Further advantages, features and details of the invention are revealed in the following description of material and methods as well as preferred exemplified embodiments and with the aid of the drawing which shows schematically in

Fig. 1    a perspective view of a yarn bobbin;

Fig. 2    Beer-Lambert fit based on reference samples;

Fig. 3    plotted distance vs. density for a faulty yarn bobbin;

Fig. 4    plotted distance vs. density for a good yarn bobbin.

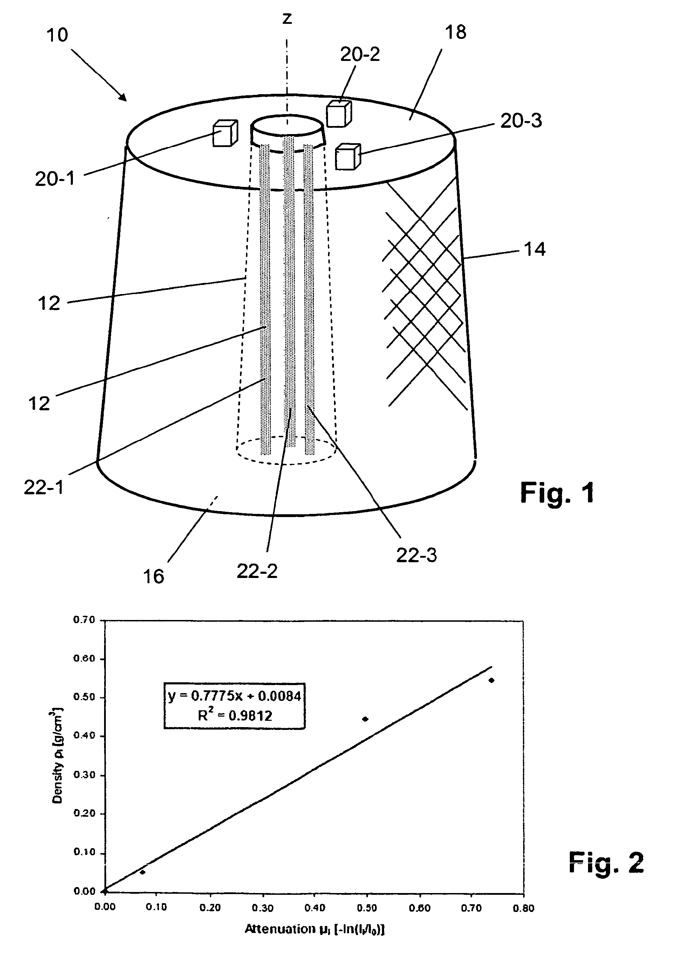

A yarn bobbin 10 shown in Fig. 1 comprises a tubular (cylindrical or conical) core 12 on which the yarn is wound. The yarn bobbin 10 has the shape of a truncated cone or a cylinder with a lateral surface 14 having a rotational symmetry about a rotational axis z, a lower base surface 16 and a smaller upper base surface 18 perpendicular to the rotational axis z. Three prismatic pieces 20-1, 20-2, 20-3 of reference materials are fixed to the upper base surface 18. Alternatively, the prismatic pieces of reference materials can be replaced by three rods 22-1, 22-2, 22-3 arranged within the tubular core 12. The setup of yarn bobbin and reference materials can be arranged arbitrarily, fulfilling the previously mentioned requirements, that the reference materials and yarn bobbin are rotating together around the same axis at same angle speed.

Materials and Methods

For the investigation a yarn bobbin with good and one with faulty windings was used. The thickness of the yarn was determined with a caliper to be around 70 $\mu$m. The images were recorded with a v|tome|x c 225D microtomograph of phoenix|x-ray Systems + Services GmbH, Germany. The operation conditions for the X-Ray source were set at a voltage of 150 kV and current of 160 $\mu$A, yielding a power output of 24 W. The yarn bobbin together with the fixed samples was rotated stepwise, i.e. with 0.3° per step and 0.24° per step for the good and faulty bobbin, respectively through 360°. Thereby transmission images were recorded at each step with an exposure time of 200 ms. In order to minimise the noise 3 frames were averaged for the good bobbin, whereas 5 frames were averaged for the faulty bobbin. Sample recording took place at a magnification of 2.4 $\times$. The resolution in the back-projected axial transmission images is about 336 $\mu$m. A 16-bit X-ray camera (Charge Coupled Device (CCD); High-contrast|set) coupled to a scintillator served as detector for grey level resolution and allowed transmission of maximal cross section areas of 512 x 512 pixel (400 $\mu$m/ pixel).

The principle of XRCT is based on x-ray attenuation. Basically, absorption of x-rays in solids is a function of density, average atomic number and thickness of the material and is described by Beer's law (Eq. 1):

$$\frac{I_i}{I_0} = e^{(-\mu_i x)} \tag{1}$$

where x stands for the sample thickness, $I_0$ for the primary intensity, $I_i$ for the measured intensity and $\mu_i$ represents the corresponding attenuation coefficient of the phase i. The attenuation coefficient $\mu_i$ of each constituent i depends on the related density i and varies linearly:

$$\mu_i \cong K\rho_i \tag{2}$$

with K as material depending constant. The combination of equation (1) and equation (2) leads to the following relationship:

$$\rho_i = \frac{\mu_i}{K} = A\left[ -\ln\left(\frac{I_i}{I_0}\right) \right] \tag{3}$$

The parameter A in equation (3) accounts for different sample thickness as well as for the chemical nature of different constituents i. The linear correlation in equation (3), between x-ray attenuation and density, is known as the Beer-Lambert law, that has been rewritten by combining equations (1) and (2), and used for the density determination from measured intensities $I_i$ of traversed x-ray beams.

The primary intensity $I_0$ as well as measured intensities $I_i$ of the corresponding phase i can be related to measured Grey Levels GL from back-projected transmission images and according to equation (3) converted to density values. For the linear extrapolation, in a first step, three reference materials of which the density was determined by the standard Archimedes principle were used (Table I). Reference samples were placed on top of the faulty yarn bobbin, using a double sided adhesive tape. The primary intensity $I_0$ was assigned to air with a density value of 0.0012 g/cm³.

Table I: Different media and corresponding densities used as reference for Beer-Lambert fit.

| Medium | Density [g/cm³] |
|---|---|
| Air | 0.0012 |
| PS | 0.05 |
| Lamina | 0.45 |
| Forex | 0.55 |
| PS, Lamina and Forex are foamed plastic materials with a fine and homogenous cell structure. | |

Based on the determined densities and measured intensities $I_i$ of the corresponding reference material i (with i = air, PS, Lamina and Forex) the Beer-Lambert fit was obtained, using equation (3). In a next step, from the linear Beer-Lambert fit, each measured GL was attributed to the respective density received from back-projected transmission images of yarn bobbins. The calculated Beer-Lambert fit was verified by inserting measured GL and corresponding density values in the determined linear equation, yielding an estimation of the present error.

With the above described information a routine was introduced, that allowed to get GL profiles along cross sections of back-projected transmission images, which were transformed to density profiles. For calculation technical reasons, due to the physical nature of equation (3), GL from back-projected transmission images were inverted, yielding GL data of lowest density media with highest GL values and vice versa. GL profiles were averaged over 11 single measurements along the specimen diameter for each transmission image, in order to obtain representative GL values and hence density profiles. The routine was repeated for 11 independent transmission images at different sample heights. All sections were taken from the upper half of the investigated yarn bobbins. In a last step the determined density values were plotted against the distance d, starting from the left to the right edge of each transmission image.

In a first approach reference samples were only placed on top of the faulty yarn bobbin. Additionally, the recording conditions for the good yarn bobbin were slightly different (e.g., step size and number of averaged frames). For comparison reasons measured GL values of the good bobbin were adjusted to the calibrated level of the faulty yarn bobbin by multiplying the measured GL values by a factor of 1.92. Subsequently, the results demonstrated a good conformity.

The calculated Beer-Lambert fit, based on reference materials, revealed the following equation:

$$\rho = 0.7775 \times \left[ -\ln\left(\frac{I_i}{I_0}\right) \right] + 0.0084 \qquad (4)$$

The linear regression coefficient $R^2 = 0.9842$ from equation (4) indicates good correspondence of the assumed linearity what is also shown in Figure 2.

In order to ensure the credibility of the linear supposition, postulated in equation (4), the corresponding GL values for the different media were back calculated, yielding density values which were compared to the values measured by the Archimedes principle (Table II). For the specified primary intensity $I_0$, that was applied to establish the linear Beer-Lambert fit, a different approach was used for data verification. Hereby, the GL primarily attributed to air ($I_0 = I_{air}$) was assumed to be the measured intensity. The value was combined with the known density of air, yielding the theoretical primary intensity $I_{0,T}$ that would correspond to air under the defined conditions (Table II). Both estimations averaged, revealed an acceptable approximate error of 9%. Having in mind that density values of interest are in the range between 0.3 and 0.7 $g/cm^3$ the correlation is even better and can be classified as very good (error of ~ 5 %). The linear Beer-Lambert fit is always subject of several discussions where a compromise has to be made. The proposed fit takes care of density values in the requested range and the geometry of the sample. Material with a density < 0.06 $g/cm^3$ do not match the proposed fit as good as materials with densities > 0.06 $g/cm^3$.

Table II: Comparison of measured and calculated values according to equation (4).

| Medium | Measured Intensity $I_{air}$ [GL] | Theoretical Intensity $I_{0,T}$ [GL] | Error [%] |
|---|---|---|---|
| Air | 37.06 | 39.09 | 5.2 |
| Medium | Measured Density [g/cm³] | Calculated Density [g/cm³] | Error [%] |
| PS | 0.05 | 0.06 | 20.0 |
| Lamina | 0.45 | 0.43 | 4.4 |
| Forex | 0.55 | 0.58 | 5.5 |

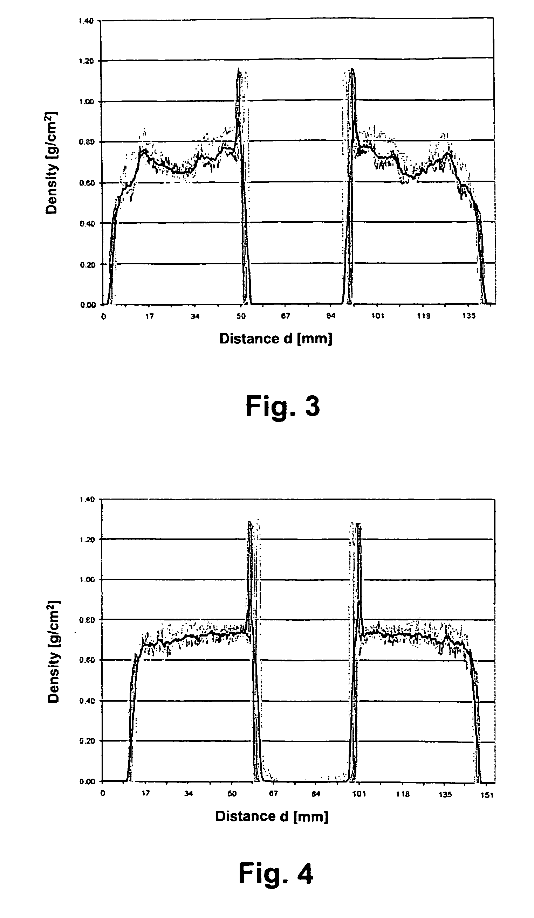

The density profile for the faulty yarn bobbin, determined from 11 cross sections, showed a rather unsteady behaviour. Additionally, the transition from air to yarn of the bobbin was found to be blurred. The density varies in a broad range between approximately 0.6 $g/cm^3$ and 0.8 $g/cm^3$ (Figure 3). The determined density values seem to correspond well to reality.

The density profile for the good yarn bobbin showed a clearly more homogeneous density profile. The transition between air and yarn is more pronounced and the density values vary in a range between 0.65 $g/cm^3$ and 0.75 $g/cm^3$ in a clearly narrower range compared to the faulty bobbin (Figure 4).

It can be summarised that XRCT is a capable tool for visualising the quality of yarn windings on bobbins. Qualitatively the difference of yarn winding between good and faulty bobbin is already evident from transmission images. Furthermore quantitative values, in terms of density profiles were obtained from a tailored process based on principles of the Beer-Lambert law. Four distinctive features can be concluded:

- The linear regression coefficient R2 = 0.9842 of the Beer-Lambert fit indicates good correspondence of the proposed linearity.

- Good yarn bobbins showed a pronounced transition between air and yarn, whereas the transition of faulty bobbins was somewhat blurred.

- Density values for faulty bobbins vary in a much broader range (~ 0.6 -0.8 g/cm$^3$) compared to good bobbins (~ 0.65 -0.75 g/cm$^3$).

- The faulty yarn bobbin shows a less homogeneous density profile compared to the good one.

**Claims**

1. Method for investigating the quality of the yarn winding density on a yarn bobbin (10) with a lateral surface (14) having a rotational symmetry about a rotational axis (z) and two base surfaces (16, 18) lying cross to the rotational axis (z),
   **characterised in that**
   the yarn winding density is visualised and **characterised by** applying X-Ray Computed Tomography (XRCT).

2. Method according to claim 1, wherein the quality of the yarn winding density is visualised using back projected transmission images in a plane preferably perpendicular or parallel to the rotational axis (z) according to the Beer-Lambert law.

3. Method according to claim 1, wherein quantitative values in terms of density profiles are obtained using back projected transmission images along cross sections, preferably perpendicular or parallel to the rotational axis (z), at different axial height levels of the yarn bobbin (10) and transforming the back projected images to density profiles.

4. Method according to claim 3, wherein materials with different densities are used as reference materials for the Beer-Lambert fit.

5. Method according to claim 4, wherein transmission images of pieces (20-1. 20-2, 20-3; 22-1, 22-2, 22-3) of the reference materials are recorded together with transmission images of the yarn bobbin.

6. Method according to claim 5, wherein the pieces (20-1, 20-2, 20-3; 22-1, 22-2, 22-3) of the reference materials are rotating together with the yarn bobbin at the same angular speed as the yarn bobbin.

7. Use of the method according to anyone of the preceding claims for dye yarn packages.

**Patentansprüche**

1. Verfahren zum Ermitteln der Qualität der Garnwickeldichte auf einer Garnspule (10) mit einer Mantelfläche (14), die eine Drehsymmetrie um eine Drehachse (z) hat, und zwei Basisflächen (16, 18), die quer zur Drehachse (z) liegen,
   **dadurch gekennzeichnet, dass**
   die Garnwickeldichte durch Anwenden einer Röntgen-Computertomografie (X-Ray Computed Tomography - XRCT) veranschaulicht und charakterisiert wird.

2. Verfahren nach Anspruch 1, wobei die Qualität der Garnwickeldichte unter Verwendung rückprojizierter Übertragungsbilder in einer Ebene, die bevorzugt senkrecht oder parallel zur Drehachse (z) liegt, nach dem Beer-Lambert-Gesetz veranschaulicht wird.

3. Verfahren nach Anspruch 1, wobei quantitative Werte im Sinne von Dichteprofilen unter Verwendung rückprojizierter Übertragungsbilder entlang Querschnitten, bevorzugt senkrecht oder parallel zur Drehachse (z), bei verschiedenen Achshöhenlagen der Garnspule (10) und Umwandeln der rückprojizierten Bilder in Dichteprofile erhalten werden.

4. Verfahren nach Anspruch 3, wobei Materialien mit verschiedenen Dichten als Referenzmaterialen für die Beer-Lambert-Anpassung verwendet werden.

5. Verfahren nach Anspruch 4, wobei Übertragungsbilder von Teilen (20-1, 20-2, 20-3; 22-1, 22-2, 22-3) der Referenzmaterialien gemeinsam mit Übertragungsbildern der Garnspule aufgenommen werden.

6. Verfahren nach Anspruch 5, wobei die Teile (20-1, 20-2, 20-3; 22-1, 22-2, 22-3) der Referenzmaterialien sich gemeinsam mit der Garnspule bei derselben Winkelgeschwindigkeit wie die Garnspule drehen.

7. Verwendung des Verfahrens nach einem der vorangehenden Ansprüche für Farbgarnwickel.

**Revendications**

1. Procédé d'analyse de la qualité de la densité d'enroulement de fil sur une bobine de fil (10) dotée d'une surface latérale (14) ayant une symétrie de rotation autour d'un axe de rotation (z) et deux surfaces de base (16, 18) reposant en travers de l'axe de rotation (z),
   **caractérisé en ce que**
   la densité d'enroulement de fil est visualisée et caractérisée en appliquant une tomographie assistée par ordinateur à rayons X (XRCT).

2. Procédé selon la revendication 1, dans lequel la qualité de la densité d'enroulement de fil est visualisée en utilisant des images de transmission rétroprojetées dans un plan de préférence perpendiculaire ou parallèle à l'axe de rotation (z) suivant la loi de Beer-Lambert.

3. Procédé selon la revendication 1, dans lequel des valeurs quantitatives en termes de profils de densité sont obtenues en utilisant des images de transmission rétroprojetées le long de sections transversales, de préférence perpendiculaires ou parallèles à l'axe de rotation (z), à différents niveaux de hauteur axiale de la bobine de fil (10) et en transformant les images rétroprojetées en profils de densité.

4. Procédé selon la revendication 3, dans lequel des matériaux de densités différentes sont utilisés comme matériaux de référence pour l'ajustage Beer-Lambert.

5. Procédé selon la revendication 4, dans lequel des images de transmission de pièces (20-1, 20-2, 20-3 ; 22-1, 22-2, 22-3) de matériaux de référence sont enregistrées avec des images de transmission de la bobine de fil.

6. Procédé selon la revendication 5, dans lequel les pièces (20-1, 20-2, 20-3 ; 22-1, 22-2, 22-3) de matériaux de référence tournent avec la bobine de fil à la même vitesse angulaire que la bobine de fil.

7. Utilisation du procédé selon l'une quelconque des revendications précédentes pour des paquets de fils à teindre.

Fig. 1

Fig. 2

**Fig. 3**

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11171403 A

- US 20030068007 A